# EUROPEAN PATENT APPLICATION

(11) **EP 3 473 534 A1**
(43) Date of publication of application: **24.04.2019**
(21) Application number: 18250019.9
(22) Date of filing: 19.09.2018
(51) Int. Cl.: B62K 3/00, B62K 13/00

(54) **AN INTER-CONVERTIBLE BICYCLE/ SCOOTER**

(30) Priority: 20.10.2017 GB 201715208
(71) Applicant: Premium World Ltd, Godalming, Surrey GU7 1HZ (GB)
(72) Inventor: Elley, David, Godalming, Surrey GU7 1HZ (GB)
(74) Representative: Whitaker, Iain Mark

(57) **Abstract**

The present invention provides an inter-convertible bicycle scooter that inter-coverts between a bicycle configuration and a scooter configuration. The bicycle scooter comprises a steering column with a handle bar operatively mounted to an upper in use end of the steering column; a front wheel operatively mounted to a lower in use end of the steering column; a chassis having a deck and a rear wheel support (eg fork) operatively bearing a rear wheel; a seat adjustably mounted (eg hinged) to the chassis to be selectively adjustable between an operative seat position at which the seat is deployed projecting out from the chassis and a stowed position at which the seat is collapsed/positioned close against the chassis, wherein the chassis is mounted on the steering column by a slidable mounting that is adjustable to be slid along the column between a zone near the lower end of the steering column and a zone near the upper end/ handle bar on the steering column and having a securing device to engage and secure the chassis at a selected zone along the steering column, whereby the bicycle scooter is converted from the bicycle configuration to the scooter configuration by slidingly raising the chassis up the steering column to the zone proximate the upper in use end of the steering column and securing it there by the securing device and by deploying the seat to its operative seat position projecting out from the chassis.

## Description

### Field of the Invention

The present invention concerns improvements primarily in and relating to ride-on toys, sports or games apparatus of the type that are interconvertible between two different functional configurations. In particular, the apparatus is suitably interconvertible between a trainer bicycle configuration and a kick-scooter configuration.

### Background to the Invention

Ride-on inter-convertible toys, sports or games apparatus are popular especially with young children, adding an extra dimension of fun to use. For ride-on children's scooters/ kick-scooters that can be re-configured and re-deployed to a second mode of use as a balance trainer bicycle (or vice-versa) there is the enjoyment of using each form for riding around as well as the fun of transforming from one form to the other. The prior art has a substantial number of examples of such apparatus such as detailed in PCT patent application WO2015/000004 and European patents EP2794389B and EP2949560B (all Scoot & Ride GmbH), EP2231466B (Tzoreff), CN202225970 (Zhihui Zhou), CN 102267519 (Goodbaby Child Products), CN201694317 (Univ. Shandong) DE20021368 (Pape Wolfgang) and US 1379305 (L Johns), the latter US patent notably dating as far back as 1921.

The prior art inter-convertible bicycle scooters predominantly have a format in which the chassis defining the deck of the scooter on which the child stands in scooter-mode can be inverted, in most cases by rotating about a swivel joint, so that what was the underside of the standing deck of the scooter becomes uppermost to serve as the seat of the bicycle in the bicycle mode of use.

Whereas these inter-convertible bicycle scooters are commonplace in the art they mostly have a number of drawbacks. They generally either require an awkward disassembly of the chassis from the steering column, or of the seat/deck from the chassis (as in DE20021368), and/or they necessitate provision of robust weight-bearing swivel joints on the chassis. In the case of EP2794389B (Scoot & Ride), there are two weight-bearing swivel joints, one between the seat/ deck and steering column and another at the rear of the seat/ deck at its joint to the rear wheel-bearing fork.

The bicycle configuration formed by inverting or otherwise moving the scooter deck for it to become the seat can detract from the geometry, look and feel of the balance bicycle. Furthermore, the location of the seat very close to the ground and to the front wheel on the underside when in scooter mode in all of these prior art interconvertible bicycle scooters directly exposes the seat to dirt/mud from the scooter wheels so that when it is subsequently deployed as the bicycle seat, the seat will often first need to be thoroughly wiped clean before use.

### Summary of the Invention

According to a first aspect of the present invention there is provided an interconvertible bicycle scooter that inter-coverts between a bicycle configuration and a scooter configuration, the bicycle scooter comprising:
a steering column with a handle bar operatively mounted to an upper in use end of the steering column;;
a front wheel operatively mounted to a lower in use end of the steering column;
a chassis having a deck and a rear wheel support (eg fork) operatively bearing a rear wheel;
a seat adjustably mounted (eg hinged) to the chassis to be selectively adjustable between an operative seat position at which the seat is deployed projecting out from the chassis and a stowed position at which the seat is collapsed/positioned close against the chassis,
the chassis being mounted on the steering column by a slidable mounting that is adjustable to be slid along the column between a zone proximate the lower in use end of the steering column and a zone proximate the upper end/ handle bar on the steering column and having a securing device to secure the chassis at a selected zone along the steering column, whereby the bicycle scooter is converted from the bicycle configuration to the scooter configuration by slidingly raising the chassis up the steering column to the zone proximate the upper in use end of the steering column and securing it there by the securing device and by deploying the seat to its operative seat position projecting out from the chassis.

By configuring the inter-convertible bicycle scooter in this manner a number of distinct features and benefits arise.

The geometry of the inter-convertible bicycle scooter more convincingly and dramatically transforms in shape from a configuration where the steering column is substantially upright/ vertical in the scooter mode to a configuration where the steering column is more inclined/ raked with the front wheel in the bike mode positioned substantially forwards of the handle bar.

The seat is not formed as an underside of the chassis. It is a separate structure that is securely coupled and mounted to the chassis and which is adjustable between deployed and stowed positions. The seat is advantageously mounted on and stows against upper surfaces of the chassis and is thus shielded from dirt or damage from below by the chassis in the stowed state when the bicycle scooter is being used as a scooter. The seat can be shaped for better comfort and suitably positionally adjusted by the adjustable seat mounting between different operative positions if desired. Preferably the seat is adapted to nest against the steering column when stowed. An end of the seat may have a slot, groove or other feature that engages with (suitably accommodates the profile of) the steering column when the seat is in stowed position.

Preferably the slidable mounting of the chassis to the steering column comprises a head tube, collar or sleeve on the chassis that substantially encircles the steering column and which is free to slide up or down the steering column when the securing device is disengaged. Preferably the securing device is a clamp on the chassis that is selectively adjustable to clamp onto the steering column. Preferably the chassis is a unitary moulding that comprises a deck portion that defines the deck, a coupling portion that defines a feature for sliding coupling to the steering column and an intermediate portion between them that is angled downwardly and away from the coupling portion to position the deck at a level between the front and rear wheels in scooter configuration.

Preferably the seat is pivotally coupled to the chassis to tilt between the stowed position lying stowed against the chassis and the deployed position.

Suitably the seat is pivotally coupled to the chassis by slidably adjustable hinge structure in which a pivot pin of the hinge structure may be repositioned between at least two selectable holding postions to hold the seat in different operative seat positions so that the user has a choice of seat angle for sitting. The adjustable hinge structure may comprise a detent lug on the seat and a plurality of notches on the chassis with each notch defining a respective selectable holding position.

### Brief Description of the Drawings

A preferred embodiment of the present invention will now be more particularly described by way of example with reference to the accompanying drawings wherein:
**Figure 1** is an isometric frontal view of the preferred embodiment of the interconvertible bicycle scooter in its scooter configuration
**Figure 2** is an isometric rear view of the scooter configuration;

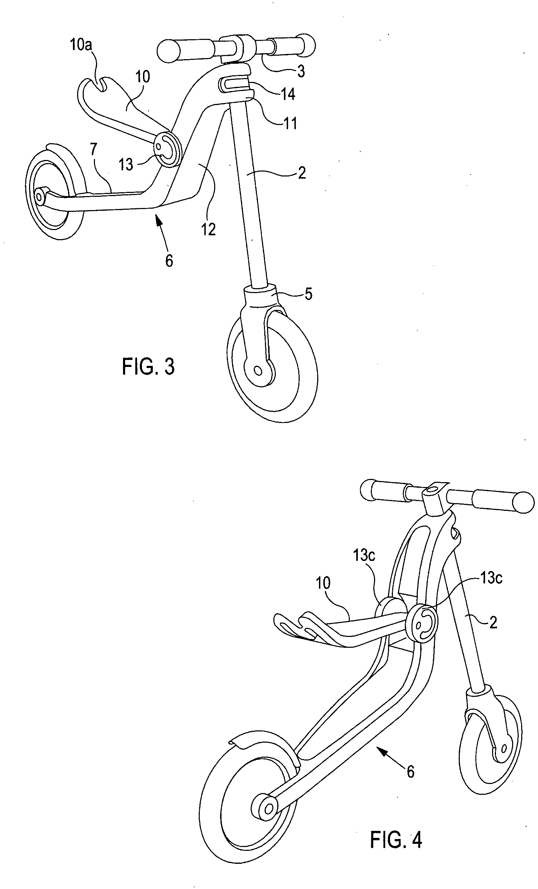

**Figure 3** is an isometric frontal view of the preferred embodiment of the interconvertible bicycle scooter in its training balance bike configuration
**Figure 4** is an isometric rear view of the bike configuration;
**Figure 5** is a side elevation view of the scooter configuration but showing the seat part-way through being unfolded down to its operative position for transformation to the bike configuration;
**Figure 6** is a close-up view of the slidable mounting of the chassis to the steering column (head tube of chassis slidable up and down steering column) and showing the securing clamp being disengaged to allow the chassis to be raised up the steering column for transformation to the bike configuration;
**Figure 7** is a close-up view of the slidable mounting of the chassis to the steering column and showing the subsequent step of the chassis being raised up the steering column;
**Figure 8** is a side elevation view of the bike configuration as achieved once the head/tube of the chassis has been raised fully up in the direction of arrow F to abut the underside of the handlebar and there locked in place by re-applying the securing clamp;
**Figure 9** is a close-up view of the adjustable hinge mounting of the seat to the chassis, showing the detent lug of the seat engaged in a middle notch on the chassis for a mid-range seat tilt position and with the user having the option to adjust to a greater or lesser angle of seat tilt by pulling the seat rearwardly, in the direction R, to disengage from that notch and then select another notch;
**Figure 10** is a close-up view of the adjustable hinge, showing the detent lug subsequently retracted rom the middle notch for tilt adjustment;
**Figure 11** is a close-up view of the adjustable hinge, showing the seat rear tilted up and the seat pushed toward the steering column so that the detent lug engages with the lower notch to hold the seat in that position;
**Figure 12** is a further isometric frontal view of the inter-convertible bicycle scooter in its bike configuration but showing the handlebar de-mounted from the steering column to enable the bicycle scooter to be collapsed fully for storage when not in use; and
**Figure 13** is an isometric rear view of the dis-assembled bicycle scooter as compacted for storage.

### Description of the Preferred Embodiment

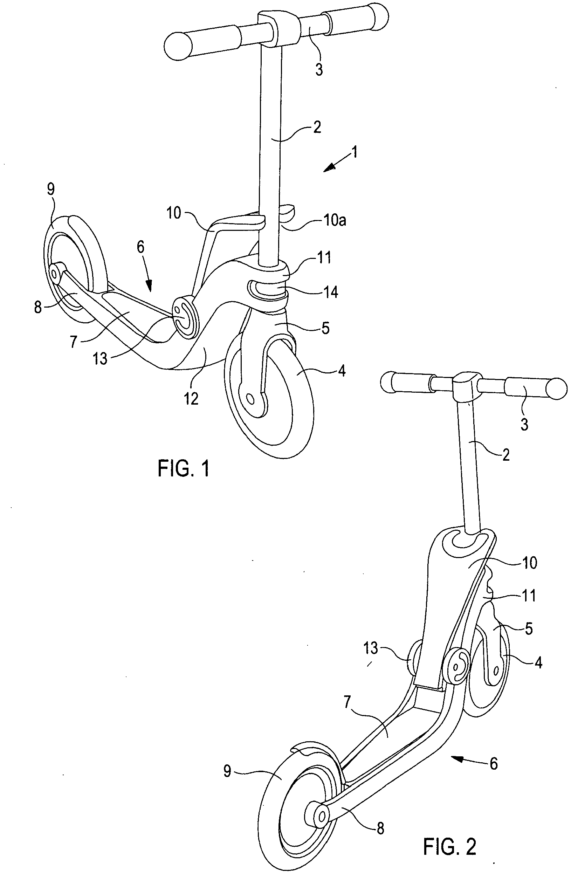

Referring to Figure 1, the illustrated interconvertible scooter-bicycle 1 comprises a steering column 2 with a handle bar 3 that is de-mountably mounted to the upper end of the steering column 1. A front wheel 4 is mounted on a fork 5 at the lower end of the steering column 2; and a chassis 6 is mounted to the steering column 2 between the fork 5 and handle bar 3. The chassis incorporates a deck 7 for a child to stand on in scooter mode and has a rear wheel fork 8 and rear wheel 9 at the rear of the chassis 6. The scooter-bicycle 1 further comprises a seat 10 for use of the scooter-bicycle 1 in bicycle mode.

The chassis 6 of the preferred embodiment is a unitary moulding, suitably of a tough plastics such as HDPE or ABS, that incorporates three major portions: i) a portion that defines the deck 7; ii) a mounting portion that defines a mounting 11 for sliding coupling of the chassis 6 to the steering column 2; and iii) an intermediate portion 12 between them that is angled downwardly and away from the coupling portion to position the deck at a level between the front 4 and rear 8 wheels in scooter configuration. In bicycle anatomy terms, the mounting 11 is equivalent to the headtube of a bicycle or scooter and the intermediate portion 12 of the chassis 6 is equivalent to the downtube of a bicycle. The seat 10 is supportively mounted and coupled to the chassis 6 by a hinge 13 at its proximal end and has a groove 10a at its remote end that engages/ straddles the steering column 2 when the seat is stowed. The hinge 13 has the form of a cradle on the chassis 6 with a pivot pin 13a that spans between sidewalls 13c of the cradle and passes through a pivot socket 13b in the seat 10. The hinge 13 allows the seat 10 to be selectively adjusted between any of a number of operative seat positions at which the seat is deployed projecting substantially perpendicularly out from an upright part of the chassis 6 and to and from a stowed position at which the seat 10 is collapsed, ie positioned substantially flattened/ substantially closely plane parallel, against the chassis 6.

The chassis 6 is mounted on the steering column 2 by the slidable mounting 11. The mounting 11 is in the form of a head tube that encircles the steering column 2 and which is height adjustable by sliding up or down along the steering column 2 between a zone 2a proximate the lower end of the steering column 2 and a zone 2b proximate the upper end of the steering column 2, just under the handle bar 3.

A securing clamp 14 is incorporated into the front of the slidable mounting 11 of the chassis 6 to secure the chassis 6 at any selected zone up the steering column 2. The securing clamp 14 has an arcuate curved lever handle 13a that is easily graspable and operable to release the clamp for adjustment or to re-apply the clamp when the adjustment has been made.

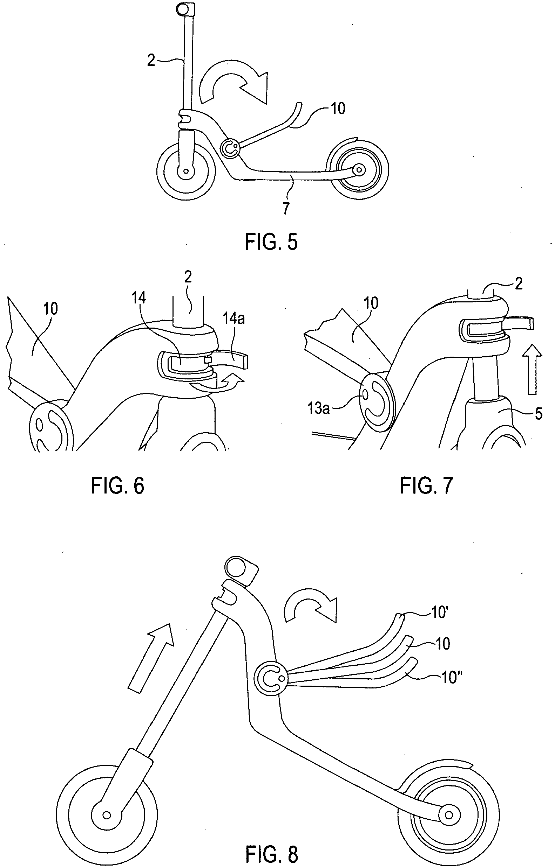

As can best be seen in Figures 6 to 8, the bicycle scooter 1 is converted from the scooter configuration to the bicycle configuration by firstly gripping the lever handle 14a and releasing the securing clamp 14 (Figure 6) and then slidingly raising the slidable mounting 11 (Figure 7), and hence raising the chassis 6, up the steering column 2 to the upper zone 2b proximate the upper in use end of the steering column 2. The slidable mounting 11 is then secured there by re-applying the securing clamp 14. The adoption of bicycle configuration is begun or completed by deploying the seat 10 by tilting it rearwardly and down about the pivot pin 13a of hinge 13 to its operative seat position projecting substantially orthogonally out from the ultimately substantially upright intermediate portion 12 of the chassis 6 (Figure 8). Since the intermediate portion 12 is substantially upright when the slidable mounting 11 is at the upper zone 2b proximate the upper in use end of the steering column 2 and since the seat 10 projects substantially orthogonally out from the intermediate portion 12 the seat is effectively substantially horizontal.

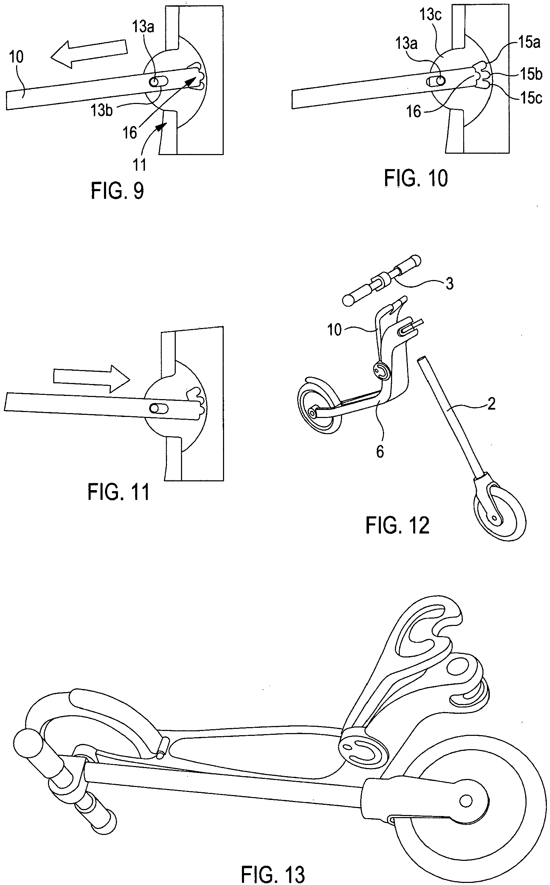

Referring to Figures 9 to 11, for user comfort the angle of tilt of the seat 10 when deployed can be adjusted within a limited range by virtue of the hinge 13 being adjustably detained at a range of different holding positions. The illustrated embodiment has three alternative positions shown in Figure 8. Each holding position is determined by a respective notch or groove 15a-c in a recess at the base of the cradle of the hinge 13 on the chassis 6. A detent lug 16 on the mounting end of the seat 10 co-operatively engages with one of the notches or grooves 15a-c when the mounting end of seat 10 is pushed forward into the chassis 6 (Figure 11). Conversely, as shown in Figure 9, pulling the seat 10 rearwardly disengages the lug 15 from a notch 14a and allows the seat to be pivoted to a new angle of tilt. The hinge 13 is a sliding hinge, having its pivot pin 13a able to slide a short distance back and forth within the elongate slot-shaped pivot socket 13b, and is thus able to accommodate the small forward or reverse sliding movement of the seat 10 into and out of detention at each of the angular positions

## Claims

1. An inter-convertible bicycle scooter that inter-coverts between a bicycle configuration and a scooter configuration, the bicycle scooter comprising:
a steering column with a handle bar operatively mounted to an upper in use end of the steering column;
a front wheel operatively mounted to a lower in use end of the steering column;
a chassis having a deck and a rear wheel support operatively bearing a rear wheel;
a seat adjustably mounted to the chassis to be selectively adjustable between an operative seat position at which the seat is deployed projecting out from the chassis and a stowed position at which the seat is collapsed/positioned close against the chassis,
the chassis being mounted on the steering column by a slidable mounting that is adjustable to be slid along the column between a zone proximate the lower in use end of the steering column and a zone proximate the upper end/ handle bar on the steering column and having a securing device to engage and secure the chassis at a selected zone along the steering column, whereby the bicycle scooter is converted from the bicycle configuration to the scooter configuration by slidingly raising the chassis up the steering column to the zone proximate the upper in use end of the steering column and securing it there by the securing device and by deploying the seat to its operative seat position projecting out from the chassis.

2. An inter-convertible bicycle scooter as claimed in claim 1, wherein the seat is mounted on and stows against upper surfaces of the chassis and is thus shielded by the chassis in the stowed state when the bicycle scooter is configured as a scooter.

3. An inter-convertible bicycle scooter as claimed in claim 1 or 2, wherein the seat is adapted to nest against the steering column when stowed, an end of the seat having a slot or groove that engages with the steering column when the seat is in stowed position.

4. An inter-convertible bicycle scooter as claimed in any preceding claim, wherein the slidable mounting of the chassis to the steering column comprises a head tube, collar or sleeve on the chassis that substantially encircles the steering column and which is free to slide up or down the steering column when the securing device is disengaged.

5. An inter-convertible bicycle scooter as claimed in any preceding claim, wherein the securing device is a clamp on the chassis that is selectively adjustable to clamp onto the steering column.

6. An inter-convertible bicycle scooter as claimed in any preceding claim, wherein the chassis is a unitary moulding that comprises: a deck portion that defines the deck; a mounting portion that defines a feature for sliding mounting to the steering column; and an intermediate portion between them that is angled downwardly and away from the mounting portion.

7. An inter-convertible bicycle scooter as claimed in any preceding claim, wherein the seat is pivotally mounted to the chassis to tilt between the stowed position lying stowed against the chassis and the deployed position.

8. An inter-convertible bicycle scooter as claimed in any preceding claim, wherein the seat is pivotally coupled to the chassis by a slidably adjustable hinge structure in which a pivot pin of the hinge structure may be repositioned between at least two selectable holding postions to hold the seat in different operative seat positions so that the user has a choice of seat angle for sitting.

9. An inter-convertible bicycle scooter as claimed in claim 8, wherein the adjustable hinge structure comprises a detent lug on the seat and a plurality of notches on the chassis side of the hinge with each notch defining a respective selectable holding position.
